## Europäisches Patentamt

## European Patent Office

## Office européen des brevets

(19)

(11) Veröffentlichungsnummer: **0 047 432**
**B1**

(12)

# EUROPÄISCHE PATENTSCHRIFT

(45) Veröffentlichungstag der Patentschrift:
**14.11.84**

(51) Int. Cl.³: **B 05 C 15/00**, B 03 C 3/16

(21) Anmeldenummer: **81106626.5**

(22) Anmeldetag: **26.08.81**

(54) **Verfahren zur mehrstufigen Reinigung der Abluft einer Farb- oder Lackspritzkabine.**

(30) Priorität: **04.09.80 DE 3033277**

(43) Veröffentlichungstag der Anmeldung:
**17.03.82 Patentblatt 82/11**

(45) Bekanntmachung des Hinweises auf die Patenterteilung:
**14.11.84 Patentblatt 84/46**

(84) Benannte Vertragsstaaten:
**DE GB IT SE**

(56) Entgegenhaltungen:
**DE - A - 2 928 226**
**GB - A - 2 017 527**
**US - A - 3 421 293**
**US - A - 3 856 476**

(73) Patentinhaber: **Dürr Anlagenbau GmbH,
Spitalwaldstrasse 18,
D-7000 Stuttgart 40 (Zuffenhausen) (DE)**

(72) Erfinder: **Bhatnagar, Satpal, Dipl.-Ing.,
Muskatellerstrasse 19, D-7143 Vaihingen-Rosswag (DE)**
Erfinder: **Haueise, Rolf, Ing. grad.,
Erwin-Bälz-Strasse 65, D-7120 Bietigheim-Bissingen
(DE)**

(74) Vertreter: **Hoeger, Stellrecht & Partner,
Uhlandstrasse 14c, D-7000 Stuttgart 1 (DE)**

## Beschreibung

Die Erfindung betrifft ein Verfahren zur mehrstufigen Reinigung der Abluft aus einer Farb- oder Lackspritzkabine einer mehrere Behandlungskabinen umfassenden Spritzanlage, bei dem ein Teil der Lackpartikel mittels eines Feuchtreinigungsgeräts aus der Abluft entfernt und diese dann in einer weiteren Reinigungsstufe gefiltert wird, worauf zumindest ein Teil der gefilterten Abluft in einer der Behandlungskabinen als Zuluft wieder verwendet wird.

Bei einer bekannten Anlage zur Durchführung eines derartigen Verfahrens (DE-A-2 928 226) soll das Feuchtreinigungsgerät, dem die Abluft der Spritzkabine zunächst zugeführt wird, so ausgebildet sein, dass es den Feuchtigkeitsgehalt der Abluft nur geringfügig erhöht. Als weitere Reinigungsstufe dient ein solches Luftfilter wie ein Glafaser- oder Aktivkohlefilter, durch das der Feuchtigkeitsgehalt der Abluft gleichfalls nicht wesentlich geändert wird. Diese Bedingungen für das Feuchtreinigungsgerät und die weitere Reinigungsstufe dienen dem Zweck, die Luftfeuchtigkeit in derjenigen Kabine der Spritzanlage, in die zumindest ein Teil der gereinigten Abluft wieder eingeleitet wird, nicht so stark ansteigen zu lassen, dass für dort arbeitende Personen ein unerträgliches Klime entsteht.

Diese bekannte Anlage und das mit ihr durchgeführte Verfahren haben jedoch eine ganze Reihe von Nachteilen:

Zum einen lassen sich mit einem die vorstehend erwähnte Bedingung erfüllenden Feuchtreinigungsgerät die Lackpartikel und Lösungsmitteldämpfe nur höchst unzureichend aus der Abluft entfernen, und zum anderen haben Luftfilter wie Glasfaser- und Aktivkohlefilter bei der Reinigung der Abluft einer Farb- oder Lackspritzkabine nur eine geringe Standzeit, da sie durch die klebrigen Lackpartikel nach kurzer Betriebsdauer so stark verunreinigt sind, dass sie ausgewechselt und gereinigt werden müssen.

Der Erfindung lag die Aufgabe zugrunde, ein Verfahren der eingangs erwähnten Art zu schaffen, welches eine gute Reinigung der Abluft und geringe Stillstandszeiten einer Anlage, mit der dieses Verfahren durchgeführt wird, gewährleistet. Diese Aufgabe lässt sich erfindungsgemäss dadurch lösen, dass zunächst durch einen Wäscher ein Teil der Lackpartikel aus der Abluft ausgewaschen und der Feuchtigkeitsgehalt der letzteren soweit erhöht wird, dass die Abluft im wesentlichen mit Wasserdampf gesättigt ist, dass die Abluft dann unter Aufrechterhaltung ihres Feuchtigkeitsgehalts durch einen Nasselektroabscheider geführt wird, dessen Abscheidungsflächen zum laufenden Abführen des Lackpartikelniederschlags währenddessen mit einer Spülflüssigkeit abgespült werden, welche zum Abscheiden zumindest eines Teils der Lackpartikel wieder aufbereitet und dann in den Nasselektroabscheider zurückgeführt wird, und dass die durch den Nasselektroabscheider entfeuchtete Abluft mindestens teilweise in eine der Kabinen zurückgeführt wird.

Die Erfindung macht dabei von bekannten Geräten Gebrauch, nämlich von einem für Spritzkabinen üblichen Wäscher (s. z.B. US-A-3 168 031 und US-A-3 421 293) sowie einem gleichfalls bekannten Nasselektroabscheider (s. z.B. US-A-3 856 476). Der erfindungsgemässen Lösung liegt die Erkenntnis zugrunde, dass Wäscher der für Spritzkabinen üblichen Bauart, die Lackpartikel und Lösungsmitteldämpfe ausserordentlich wirksam aus der Abluft entfernen, deren Feuchtigkeitsgehalt soweit erhöhen, dass er ohne eine zusätzliche Konditionierung der Abluft für den Betrieb eines Nasselektroabscheiders ausreichend ist, und dass durch den letzteren der Feuchtigkeitsgehalt der Abluft wieder verringert wird, so dass sie sich mindestens teilweise als Zuluft in einer der Kabinen der Spritzanlage wieder verwenden lässt. Durch die Erfindung wird also nicht nur die durch eine Spritzanlage verursachte Umweltbelastung, sondernn auch der Energiebedarf vermindert, da die Zuluft zu der Spritzanlage nicht vollständig aus Frischluft besteht, die zunächst auf eine Temperatur von ca. 23 bis 24°C erwärmt werden muss.

Enthält die den Wäscher verlassende Abluft mehr Feuchtigkeit als für den Betrieb des Nasselektroabscheiders erforderlich, so wirdd empfohlen, zwischen dem Wäscher und den Elektroden des Nasselektroabscheiders ein Nassentfeuchtungsmittel in die Abluft zu sprühen. Bei diesem Nassentfeuchtungsmittel kann es sich um eine der bekannten, z.B. in Wasser löslichen Entfeuchtungsmittel wie Kalzium- oder Lithiumchlorid handeln, bevorzugt wird jedoch stark gekühltes Wasser verwendet, wobei die der Abluft vom Nassentfeuchtungsmittel entzogene Wärme mittels einer Wärmepumpe zurückgewonnen und zum nachfolgenden Anwärmen der gereinigten Abluft verwendet werden kann. Durch das Abkühlen der zu reinigenden Abluft vor den Elektroden des Nasselektroabscheiders werden in der Abluft durch Kondensation Wassertröpfchen erzeugt, die sich im Nasselektroabscheider niederschlagen, und durch das nachfolgende Wiederanwärmen der gereinigten Abluft erhält man Luft mit geringerer relativer Feuchtigkeit.

Reicht in Sonderfällen die durch den Wäscher in die Abluft eingetragene Feuchtigkeit für den Betrieb des Nasselektroabscheiders nicht vollständig aus, so kann zwischen dem Wäscher und den Elektroden des Nasselektroabscheiders aber auch ein Befeuchtungsmittel in die Abluft gesprüht werden.

Der Entfeuchtungseffekt des Nasselektroabscheiders wird noch dadurch begünstigt, dass bei einer bevorzugten Ausführungsform des erfindungsgemässen Verfahrens als Spülflüssigkeit für die Abscheidungsflächen des Nasselektroabscheiders gekühltes Wasser verwendet wird.

Weitere Merkmale, Vorteile und Einzelheiten der Erfindung können den beigefügten Ansprüchen sowie der nachfolgenden Beschreibung und der ebenfalls beigefügten zeichnerischen Darstellung bevorzugter Ausführungsformen einer erfindungsgemäss ausgerüsteten Lackier-Spritzanlage entnommen werden; in der Zeichnung zeigen:

Fig. 1 eine Ausführungsform der Lackieranlage in schematischer Darstellung;

Fig. 2 einen der Nasselektroabscheider dieser Lackieranlage, und

Fig. 3 — ebenfalls schematisch — eine Lackspritzkabine mit zugeordnetem Nasselektroabscheider.

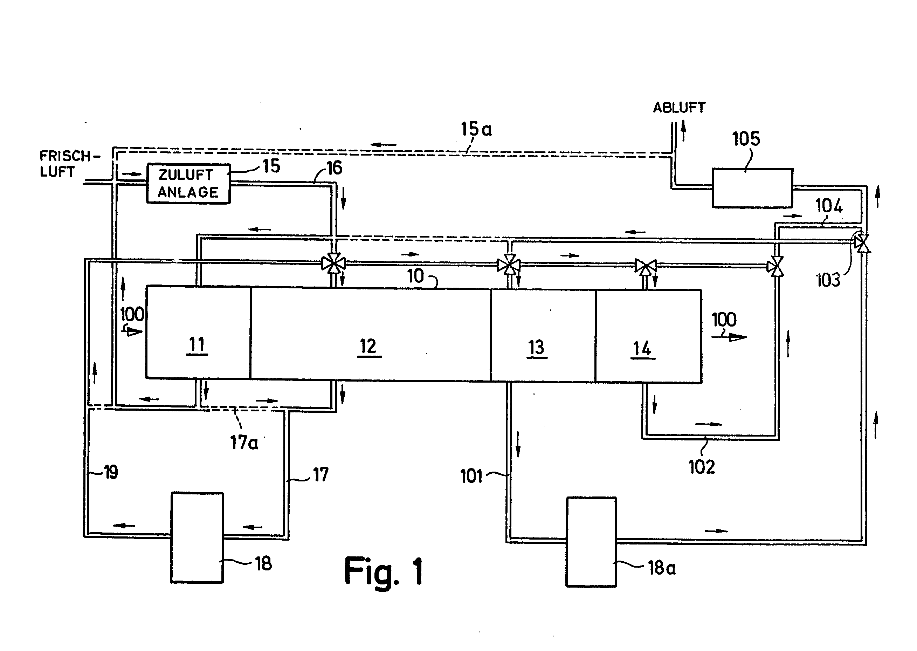

Eine in Fig. 1 schematisch dargestellte Lackier-Spritzanlage 10 ist in 4 Kammern oder Zonen, z.B. eine sogenannte Abreibzone 11, eine Handspritzzone 12, eine automatische (maschinelle) Spritzzone 13 und eine sogenannte Abdunstzone 14 unterteilt. Die Zonen 11 bis 14 werden von den zu lackierenden Gegenständen, z.B. Kraftfahrzeugkarosserien, in Richtung der Pfeile 100 nacheinander durchlaufen. Hierbei wird der Lackierspritzanlage 10 in bekannter Weise Frischluft über eine Zuluftanlage 15 und eine Leitung 16 zugeleitet. Die in der Zuluftanlage 15 wie üblich erwärmte Frischluft kann nur einzelnen Kammern oder Zonen der Lackierspritzanlagen, z.B. wie in Fig. 1 dargestellt, den Zonen 11 und 12, oder allen Zonen 11 bis 14 zugeleitet werden. Es ist aber auch jede andere Luftführung möglich, beispielsweise eine solche, bei der die gesamte Frischluft der Abreibzone 11 oder der Handspritzzone 12 zugeführt wird und dann nacheinander die anderen Zonen durchströmt, was eine Ersparnis an Frischluftzufuhr und damit an Energie für deren Erwärmung ermöglicht.

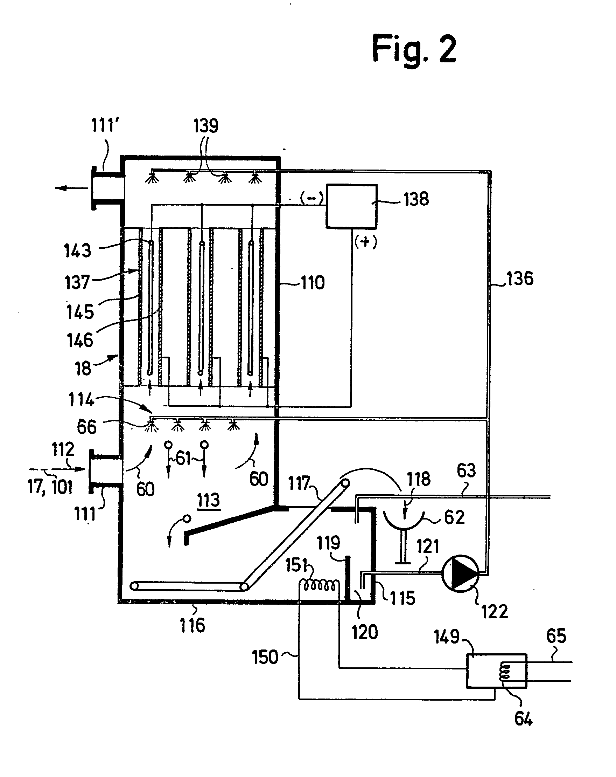

Beim Durchströmen z.B. der Handspritzzone 12 nimmt die Zuluft zunächst Lackteilchen und Lösungsmittel des Lacks auf und gelangt als hiermit beladene Abluft in einen üblichen, in Fig. 1 nicht dargestellten Wäscher der Lackieranlage, in dem ein Teil der Lackteilchen und des Lösungsmittels aus der Abluft ausgewaschen und diese mit Wasserdampf sowie Wassertröpfchen aufgeladen wird. Vom Wäscher wird die Abluft über eine Leitung 17 in einen Nasselektroabscheider 18 geführt, von dem eine bevorzugte Ausführungsform in Fig. 2 dargestellt wurde. In diesem Nasselektroabscheider erfolgt eine Reinigung der Abluft nicht nur von den darin enthaltenen Lack- und Schmutzteilchen, sondern teilweise auch von den Lösungsmitteldämpfen, mit denen die Abluft angereichert ist. Darüber hinaus kann der Nasselektroabscheider 18 auch mit Vorteil zur Entfeuchtung der ihn durchströmenden Abluft herangezogen werden.

Dem Nasselektroabscheider 18 kann auch die Staub und Schmutz enthaltende Abluft der Abreibzone 11 über eine Leitung 17a und die Leitung 17 zugeführt werden. Anderenfalls wird die Abluft der Abreibzone 11 über eine Leitung 17b, welche ggf. ein übliches Filter enthält, wieder vor die Zuluftanlage 15 geführt.

Die im Nasselektroabscheider gereinigte bzw. behandelte Luft wird durch eine Leitung 19 in den beiden übrigen Zonen (Automatenzone 13 und Abdunstzone 14) der Lackierspritzanlage 10 zugeleitet. Die gereinigte und behandelte Abluft wird dort jeweils in einem Teilkreislauf 101 bzw. 102 geführt, wobei der Teilkreislauf 101 der Automatenzone 13 und der Teilkreislauf 102 der Abdunstzone 14 zugeordnet ist. In dem der Automatenzone 13 zugeordneten Teilkreislauf 101 ist ein mit 18a bezeichneter, weiterer Nasselektroabscheider angeordnet, der in seinem Aufbau dem Nasselektroabscheider 18 (vgl. Fig. 2) entsprechen kann. Ein Teil der in den Kreisläufen 101 und 102 zirkulierenden Luft wird — permanent oder periodisch — bei 103 bzw. 104 jeweils abgezogen und nach vorherigem Durchströmen einer bekannten Lösungsmittel-Reinigungseinrichtung

105 endgültig in die Atmosphäre abgeleitet oder über eine Leitung 105a wieder vor die Zuluftanlage 15 zurückgeführt. Im ersterwähnten Fall wird eine der bei 103 bzw. 104 den Teilkreisläufen 101 und 102 entzogenen Abluftmenge entsprechende Luftmenge dem Gesamtsystem durch die Zuluftanlage 15 in Form von Frischluft wieder zugeführt.

Der Aufbau der Nasselektroabscheider 18 und 18a geht aus Fig. 2 hervor.

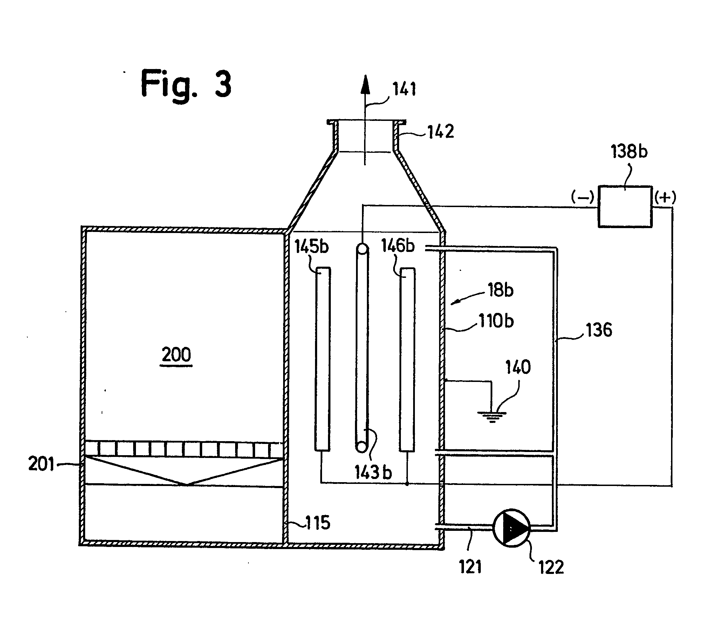

Die Räume, in denen die Reinigung und Entfeuchtung bzw. Befeuchtung der Abluft stattfindet, werden von einem gemeinsamen Gehäuse 110 umschlossen. Dieses weist einen Abluft-Einlassstutzen 111 auf, in den die mit Lackpartikel angereicherte Abluft der Handspritzzone 12 oder der Automatenzone 13 in Richtung des Pfeils 112 einströmt. Wie die Fig. 3 anhand einer Spritzkabine 200, welche den wesentlichen Teil der Handspritzzone 12 oder der Automatenzone 13 bilden kann, erkennen lässt, durchströmt die Abluft hinter der Spritzkabine einen Wäscher 201, so dass sie vor Eintritt in das Gehäuse 110b eines Nasselektroabscheiders 18b eine relative Luftfeuchtigkeit von ca. 100% bei einer Temperatur von ca. 20°C aufweist.

Bei dem Nasselektroabscheider 18 gemäss Fig. 2 gelangt die Abluft durch den Einlassstutzen 111 innerhalb des Gehäuses 110 in eine Vorentfeuchtungs- bzw. eine Vorbefeuchtungskammer 113. Es sei im folgenden der häufigere Fall angenommen, dass nämlich eine Entfeuchtung der Abluft erwünscht ist, so dass es sich bei der Kammer 113 um eine Vorentfeuchtungskammer handelt. Im oberen Bereich dieser Vorentfeuchtungskammer ist eine Sprühvorrichtung 114 mit Düsen 66 installiert, durch die in die Vorentfeuchtungskammer 13 ein z.B. in Wasser gelöstes Entfeuchtungsmittel in fein versprühter Form eingeleitet wird. Pfeile 60 verdeutlichen die Strömungsrichtung der Abluft innerhalb der Kammer 113, während die Sprührichtung der aus Wasser und Entfeuchtungsmittel bestehenden Entfeuchtungsflüssigkeit durch Pfeile 61 gekennzeichnet ist. Abluft und versprühte Entfeuchtungsflüssigkeit werden also innerhalb der Vorentfeuchtungskammer 113 im Gegenstrom bzw. Kreuzstrom aneinander vorbeigeführt. Hierdurch erfolgt einerseits eine Vorentfeuchtung der Abluft und gleichzeitig eine grobe Auswaschung derselben.

Die infolgedessen mit Wasser und Verunreinigungen angereicherte Entfeuchtungsflüssigkeit gelangt in einen am unteren Ende des Gehäuses 110 angeordneten Flüssigkeitssammelbehälter 115. Hier ist eine aus zwei Teilen 116, 117 bestehende Fördervorrichtung angeordnet, die dazu dient, die Verunreinigungen der im Behälter 115 befindlichen Flüssigkeit in Form von Schlamm auszutragen. Hierbei kann der Teil 116 der Fördervorrichtung so ausgebildet sein, dass er die am Boden des Behälters 115 befindlichen abgesetzten Verunreinigungen mitnimmt und dem mit 17 bezeichneten zweiten Teil der Fördervorrichtung übergibt. Der Teil 117 der Fördervorrichtung kann ausserdem so ausgebildet sein, dass er die innerhalb der Flüssigkeit schwebenden und/oder an der Oberfläche derselbenn schwimmenden Verunreinigungen mitnimmt. Der Schlamm wird anschliessend, wie durch einen Pfeil 118 angedeutet, in einen bereitgestellten Behälter 62 abgeführt. Innerhalb des Flüssigkeitssammelbehälters 115 ist des weiteren eine Trennwand 119 angeordnet, so dass sich an der rechten Seite des Behälters 115 ein Teilraum 120 ergibt, in dem die Flüssigkeit einen relativ hohen Reinheitsgrad aufweist. Von dem Teilraum 120 führt eine eine Pumpe 122 enthaltende Flüssigkeitsleitung 121 zu der bereits erwähnten Sprühvorrichtung 114. Das in Wasser gelöste Entfeuchtungsmittel wird also innerhalb des Entfeuchtungssystems im Kreislauf geführt.

Da die auf diese Weise im Kreislauf geführte Entfeuchtungsflüssigkeit aufgrund der ständig zugeführten feuchten Abluft im Laufe der Zeit immer mehr Wasser aufnimmt, muss sie regelmässig, d.h. entweder kontinuierlich oder periodisch, teilweise entwässert werden. Sie kann zu diesem Zweck aus dem Teilraum 120 des Flüssigkeitssammelbehälters 115 abgezogen und — ggf. über einen Economiser (nicht dargestellt) — in einen gleichfalls nicht gezeigten Wärmetauscher eingeleitet werden, wo die Entfeuchtungsflüssigkeit stark erwärmt wird. Zur Wärmezufuhr innerhalb des Wärmetauschers kann z.B. Wasserdampf dienen, der durch die z.B. im nicht gezeigten Trockner der Lackieranlage anfallenden heissen Abgase erwärmt worden ist. Die so erwärmte Entfeuchtungsflüssigkeit kann nun in einer nicht gezeigten Entfeuchtungskammer mittels Düsenn fein versprüht werden. Gleichzeitig wird der Entfeuchtungskammer relativ kalte und trockene Frischluft zugeführt, die sich innerhalb der Entfeuchtungskammer erwärmt und dabei Wasser aus der versprühten Entfeuchtungsflüssigkeit aufnimmt. Die teilentwässerte Entfeuchtungsflüssigkeit kann schliesslich durch eine Leitung 63 wieder in den Behälter 115 eingeleitet werden. Die Leitung 63 kann aber auch zur Frischwasserzufuhr und/oder zur Zufuhr von Chemikalien, beispielsweise eines chemischen Entfeuchtungsmittels, verwendet werden.

Bei der in Fig. 2 dargestellten Ausführungsform wird jedoch vorzugsweise reines Wasser, das heisst ohne Beimischung eines chemischen Entfeuchtungsmittels, zur Entfeuchtung der zu reinigenden Abluft verwendet. Zu diesem Zweck ist eine starke Kühlung des Wassers erforderlich, die durch den Kältemittelkreislauf 150 einer Wärmepumpe 149 bewerkstelligt werden kann. Die letztere ist also so konzipiert, dass ihr Kältemittelverdampfer 151 mit der Entfeuchtungsflüssigkeit möglichst unmittelbar im Wärmetausch steht. Bei dem Ausführungsbeispiel nach Fig. 2 ist der Kältemittelverdampfer 151 deshalb innerhalb der Entfeuchtungsflüssigkeit angeordnet. Die der letzteren entzogene Wärme kann mittels der Wärmepumpe über eine Heizleitung 65 an anderer Stelle wieder nutzbar gemacht werden. Die Wärmepumpe 149 stellt somit ein wichtiges Glied in dem beschriebenen System dar, da sie nicht nur für eine notwendige Kühlung der im Nasselektroabscheider 18 bzw. 18a zirkulierenden Entfeuchtungsflüssigkeit sorgt, sondern gleichzeitig eine Rückgewinnung der der Entfeuchtungsflüssigkeit entzogenen Wärme ermöglicht.

Neigen die in der Entfeuchtungsflüssigkeit enthaltenen Lackpartikel dazu, sich am Kältemittelverdampfer 151 festzusetzen, empfiehlt es sich jedoch, den letzteren ausserhalb des Flüssigkeitssammelbehälters 115 anzuordnen und die Entfeuchtungsflüssigkeit vor dem Wärmeaustausch zu filtrieren.

Die Entfeuchtungsflüssigkeit wird erfindungsgemäss aber auch als Spülflüssigkeit für die Abscheidungsflächen des Nasselektroabscheiders eingesetzt und zu diesem Zweck durch eine Leitung 136 in den oberen Teil des Gehäuses 110 eingeführt, in dem sich der eigentliche Elektroabscheider befindet. Dieser besteht aus mehreren parallel zueinander verlaufenden Kanälen 137 die entweder als Rohrbündel oder — wie bei der Ausführungsform nach Fig. 2 — als nebeneinanderliegende Kanäle mit Rechteckquerschnitt ausgebildet sein können. Innerhalb der Kanäle 137 ist jeweils eine draht- oder plattenförmige Elektrode 143 angeordnet, welche an den Minuspol einer elektrischen Hochspannungsquelle 138 angeschlossen ist. Die diese Elektrode jeweils umgebende Rohrwand bzw. die beiderseitigen Kanalwände 145, 146 sind dagegen an den Pluspol der Spannungsquelle 138 angeschlossen und bilden somit die Anoden. Hierdurch ergibt sich innerhalb jedes einzelnen der Kanäle 137 ein elektrisches Feld.

Die in der Vorentfeuchtungskammer 113 vorentfeuchtete und vorgereinigte Abluft gelangt nun — wie durch die Pfeile 60 angedeutet — von unten her in die Kanäle 137. Hier erfolgt eine negative Aufladung der in der Abluft noch enthaltenen Lackpartikel, Schmutzteilchen und Wassertröpfchen, so dass diese anschliessend das Bestreben haben, sich an den positiv geladenen Wänden 145, 146 der Kanäle 137 abzusetzen. Fig. 2 macht weiterhin deutlich, dass in die Kanäle 137 von oben her die gereinigte und gekühlte bzw. teilentwässerte Entfeuchtungsflüssigkeit aus der Leitung 136 eingeleitet wird. Hierzu dienen Sprüh- oder Berieselungsdüsen 139 am oberen Ende der Leitung 136. Die Kanalwände 145, 146 können exakt senkrecht angeordnet sein. Sie können aber auch gegenüber der Vertikalen um einen kleinen Winkel von bis zu 2° geneigt sein, so dass sich die in die Kanäle 137 eingeleitete Entfeuchtungs- bzw. Spülflüssigkeit an den Kanalwänden als Film absetzen und nach unten ablaufen kann. Dadurch werden die an den Kanalwänden niedergeschlagenen Lackpartikel weggeschwemmt, ehe sie sich an den Kanalwänden festsetzen können. Da die Flüssigkeit aufgrund der bei 151 vorgenommenen Kühlung bzw. einer Teilentwässerung wieder wasseraufnahmefähig ist, erfolgt weiterhin gleichzeitig innerhalb der Kanäle 137 eine weitere Entfeuchtung der die Kanäle von unten nach oben durchströmenden Abluft. Die mit Lackpartikel und Wasser angereicherte Flüssigkeit gelangt wieder in die Vorentfeuchtungskammer 113 und dann in den Flüssigkeitssammelbehälter 115, wo die bereits beschriebenen Vorgänge von neuem beginnen.

Nach Durchströmung der Kanäle 137 entweicht die gereinigte und weitgehend entfeuchtete sowie ggf. geringfügig erwärmte Abluft bei 111' aus dem Gehäuse des Nasselektroabscheiders 18. Der durch die beschriebene Vorrichtung erzielte Reinheitsgrad sowie der auf einen Wert von 60 bis 70% reduzierte relative Feuchtigkeitsgehalt der auf ca. 23 bis 24°C erwärmten Abluft gestattet eine Wiederverwendung der Abluft, z.B. in den Lackspritzkabinen einer Lackieranlage.

Fig. 3 zeigt eine Ausführungsform, bei der an eine Lackspritzkabine 200 mit üblichem Wäscher 201 ein Nasselektroabscheider 18b unmittelbar angebaut ist. Die der Ausführungsform nach Fig. 2 entsprechenden Teile sind auch in Fig. 3 mit den gleichen Bezugszeichen versehen, jedoch wurde der Buchstabe «b» hinzugefühgt. In Fig. 3 ist der Einfachheit halber nur eine einzige, an den Minuspol der Hochspannungsquelle 138b angeschlossene Elektrode 143b gezeigt, der beidseitig je eine Abscheidungswand 145b bzw. 146b zugeordnet ist. Das System ist unmittelbar geerdet, was durch das übliche Symbol 140 angedeutet wurde. Die gereinigte und entfeuchtete bzw. befeuchtete Abluft verlässt das Gehäuse 110b des Nasselektroabscheiders 18b in Richtung des Pfeils 141 durch einen Rohrstutzen 142.

## Patentansprüche

1. Verfahren zur mehrstufigen Reinigung der Abluft aus einer Farb- oder Lackspritzkabine (12, 13) einer mehrere Behandlungskabinen (11 bis 14) umfassenden Spritzanlage (10), bei dem ein Teil der Lackpartikel mittels eines Feuchtreinigungsgeräts (201) aus der Abluft entfernt und diese dann in einer weiteren Reinigungsstufe (18, 18a) gefiltert wird, worauf zumindest ein Teil der gefilterten Abluft in einer der Behandlungskabinen (11 bis 14) als Zuluft wieder verwendet wird, dadurch gekennzeichnet, dass zunächst durch einen Wäscher (201) ein Teil der Lackpartikel aus der Abluft ausgewaschen und der Feuchtigkeitsgehalt der letzteren soweit erhöht wird, dass die Abluft im wesentlichen mit Wasserdampf gesättigt ist, dass die Abluft dann unter Aufrechterhaltung ihres Feuchtigkeitsgehalts durch einen Nasselektroabscheider (18, 18a) geführt wird, dessen Abscheidungsflächen (145, 146) zum laufenden Abführen des Lackpartikelniederschlags währenddessen mit einer Spülflüssigkeit abgespült werden, die zum Abscheiden zumindest eines Teils der Lackpartikel wieder aufbereitet und dann in den Nasselektroabscheider zurückgeführt wird, und dass die durch den Nasselektroabscheider (18, 18a) entfeuchtete Abluft mindestens teilweise in eine der Kabinen (11 bis 14) zurückgeführt wird.

2. Verfahren nach Anspruch 1, dadurch gekennzeichnet, dass zwischen dem Wäscher (201) und den Elektroden (143, 145, 146) des Nasselektroabscheiders (18, 18a) ein Nassentfeuchtungsmittel (bei 114) in die Abluft gesprüht wird.

3. Verfahren nach Anspruch 1, dadurch gekennzichnet, dass zwischen dem Wäscher (201) und den Elektroden (143, 145, 146) des Nasselektroabscheiders (18, 18a) ein Befeuchtungsmittel (bei 114) in die Abluft gesprüht wird.

4. Verfahren nach Anspruch 1, dadurch gekennzeichnet, dass als Spülflüssigkeit für die Abscheidungsflächen (145, 146) des Nasselektroabscheiders (18, 18a) gekühltes Wasser verwendet wird.

5. Verfahren nach Anspruch 2, dadurch gekennzeichnet, dass als Nassentfeuchtungsmittel (bei 114) gekühltes Wasser verwendet wird.

## Claims

1. A multiple-stage cleaning process for the polluted air in a painting or varnish spraying booth (12, 13) of a spraying plant (10), comprising a plurality of processing booths (11 to 14), in which part of the varnish particles is removed from the polluted air by means of a wet cleaning apparatus (201) and the said polluted air is then filtered in a further cleaning stage (18, 18a), after which at least part of the filtered polluted air is further used as supply air in one of the processing booths (11 to 14), characterized in that first of all part of the varnish particles is washed out of the polluted air by a washing device (201) and the moisture content of the polluted air is increased to the extent that the polluted air is substantially saturated with water vapour, then, while the moisture content of the polluted air is maintained, it is passed through a wet electrode separator (18, 18a), the separation surfaces (145, 146) are meanwhile rinsed with a rinsing liquid for the continuous removal of the varnish particle precipitate, the said rinsing liquid being prepared again for separating at least part of the varnish particles and then being returned into the wet electrode separator, and the polluted air dehumidified by the wet electrode separator (18, 18a) is fed back at least in part to one of the booths (11 to 14).

2. A method according to Claim 1, characterized in that a wet dehumidifying means (at 114) is sprayed into the polluted air between the washing device (201) and the electrodes (143, 145, 146) of the wet electrode separator (18, 18a).

3. A method according to Claim 1, characterized in that a moistening means (at 114) is sprayed into the polluted air between the washing device (201) and the electrodes (143, 145, 146) of the wet electrode separator (18, 18a).

4. A method according to Claim 1, characterized in that cooled water is used as the rinsing liquid for the separation surface (145, 146) of the wet electrode separator (18, 18a).

5. A method according to Claim 2, characterized in that cooled water is used as the wet dehumidifying means (at 114).

## Revendications

1. Procédé de purification en plusieurs étapes de l'air sortant d'une cabine de projection de peinture ou de vernis (12, 13) d'une installation de projection (10) qui comprend plusieurs cabines de traitement (11 à 14), procédé dans lequel une partie des particules de vernis est, au moyen d'un dispositif de purification par voie humide (201), éliminée de l'air sortant qui est ensuite filtré dans une autre étape de purification (18, 18a), après quoi au moins une partie de l'air sortant filtré est à nouveau utilisée dans une des cabines de traitement (11 à 14) à titre d'air amené, caractérisé en ce qu'une partie des particules de vernis est tout d'abord extraite de l'air sortant par un laveur (201), le taux d'humidité de l'air sortant étant augmenté suffisamment pour qu'il soit sensiblement saturé en vapeur d'eau, en ce que l'air sortant est ensuite guidé, tout en conservant son taux d'humidité, à travers un séparateur électrique en milieu humide (18, 18a) dont les surfaces de séparation (145, 146) sont, pour évacuer continuellement le dépôt des particules de vernis, rincées pendant ce temps par un liquide de rinçage qui est à nouveau traité pour en séparer au moins une partie des particules de vernis et est ensuite ramené dans le séparateur électrique en milieu humide, et en ce que l'air sortant, déshumidifié par le séparateur électrique en milieu humide (18, 18a), est au moins partiellement ramené dans une des cabines (11 à 14).

2. Procédé suivant la revendication 1, caractérisé en ce que, entre le laveur (201) et les électrodes (143, 145, 146) du séparateur électrique en milieu humide (18, 18a), un agent de déshumidification en milieu humide est pulvérisé (en 114) dans l'air sortant.

3. Procédé suivant la revendication 1, caractérisé en ce que, entre le laveur (201) et les électrodes (143, 145, 146) du séparateur électrique en milieu humide (18, 18a), un agent d'humidification est pulvérisé (en 114) dans l'air sortant.

4. Procédé suivant la revendication 1, caractérisé en ce qu'on utilise de l'eau refroidie comme liquide de rinçage pour les surfaces de séparation (145, 146) du séparateur électrique en milieu humide (18, 18a).

5. Procédé suivant la revendication 2, caractérisé en ce qu'on utilisé de l'eau refroidie comme agent de déshumidification en milieu humide (en 114).

ABLUFT

FRISCH-LUFT

ZULUFT ANLAGE

Fig. 1

# Fig. 2

Fig. 3